# EUROPEAN PATENT SPECIFICATION

(11) **EP 3 460 940 B1**
(45) Date of publication and mention of the grant of the patent: **08.06.2022**
(21) Application number: 18183282.5
(22) Date of filing: 13.07.2018
(51) Int. Cl.: H02J 3/00, G06Q 50/06, H02J 13/00

(54) **POWER TRADING SYSTEM**
STROMHANDELSSYSTEM
SYSTÈME D'ÉCHANGE D'ÉLECTRICITÉ

(30) Priority: 20.09.2017 CN 201710855193; 10.11.2017 CN 201711107876; 10.11.2017 CN 201711107184
(43) Date of publication of application: 27.03.2019
(73) Proprietor: Hepu Technology Development (Beijing) Co. Ltd., 100176 Beijing (CN)
(72) Inventor: Cui, Hua, Beijing (CN); Yang, Yusen, Beijing (CN); Xu, Bo, Beijing (CN); Tan, Zhi, Beijing (CN); Chen, Hui, Beijing (CN)
(74) Representative: Lavoix

(56) References cited:
- WO-A1-2017/067587
- US-A1- 2016 284 033
- US-A1- 2017 206 522

## Description

### FIELD OF THE INVENTION

The present invention relates to the field of measurement control of Internet of things and energy Internet as well as block chain technologies, and more particularly, to a power trading system.

### BACKGROUND OF THE INVENTION

A super-huge network, specifically a power grid, is formed naturally from power generation, power transmission, power distribution to power utilization by virtue of the uniqueness of an electrical power system. At one end of this network, there are traditional energy including coal energy, gas energy, nuclear power energy, hydro energy and electrical energy as well as distributed renewable energy such as wind energy and solar energy. At the other end of the network, there are millions of high energy-consuming power devices, hundreds of millions of electrical power users as well as smart home appliances and electrical automobiles coming in the future. A wide variety of sensors all over China will generate massive real-time big data every minute, every millisecond, and even every microsecond; thus a huge energy Internet is created.

Data sources of the energy Internet mainly come from the following aspects: (1) coal-fired thermal power plants; (2) natural gas power plants; (3) wind farm and photovoltaic power plants; (4) natural gas-based distributed energy systems with combined cooling, heating and power; (5) distributed wind-solar energy storage battery micro-grids; (6) various levels of smart transformer substations; (7) SCADAs (Supervisory Control and Acquisition Systems) in provinces/municipalities/counties; (8) hundreds of millions of smart power meters; (9) millions of high energy-consuming power devices; and (10) future electrical automobiles. In the future, a larger number of distributed wind power energy and photovoltaic systems and storage batteries will emerge.

The energy Internet will greatly promote the development of distributed energy in the future. At the power supply side, with the installation of a great quantity of renewable energy, random fluctuation of power supplies is a major challenge for a power system. The randomness and the rigidity at the load side will be increasingly high due to changes of an electrical power consumption structure and rapid development of the electrical automobiles. In addition, along with the emergence of energy producer-consumer buildings in the further, distributed measurement and trading of energy will become the mainstream. However, a traditional centralized power grid control mode and a unified power meter data collection manner in a power grid will face great challenges in the future.

An power trading system in the prior art cannot collect, trade or record a power amount in distributed wind power energy and photovoltaic systems and storage batteries, and thus cannot meet the requirements of big data in the energy Internet.

US20170206522A1 discloses a commodity-measuring device for autonomously selecting a commodity supplier among a plurality of commodity suppliers being specified within a blockchain distributed database. A microcontroller unit is configured to provide commodity consumption data to the transaction manager. A storage is configured to store a private key, and a communication module is configured to retrieve a commodity supplier file stored in the blockchain distributed database, and the commodity supplier file includes parameters of a commodity supplier and a program. A transaction manager is configured to determine autonomously, based on the commodity consumption data and parameters in the commodity supplier file, whether to select the commodity supplier; and if the determination is positive, the transaction manager is configured to, using the private key, send a transaction to the blockchain distributed database calling a function in the program to associate the commodity supplier file with the identifier.

US20160284033A1 discloses an energy resource network with plurality of energy resources each capable of delivering a quantum of energy, and a plurality of energy-consuming-devices each capable of accepting a quantum of energy. Each energy resource is associated with an energy-resource-processor which is configured to issue one or more offer-messages in respect of a quantum of energy available for supply from the energy resource Each energy-consuming-device is associated with at least one energy-consuming-processor) that is configured to receive one or more offer-messages in respect of a transaction for receiving a quantum of energy from one of the energy resources The energy-resource-processor and/or the energy-consuming-processor being configured to issue a cryptographically-secured transaction record of the transaction for inclusion within a publicly-available distributed ledger.

WO2017067587A1 relates to a meter of a supply system, comprising at least one measuring module configured to measure at least one quantity parameter of a supply medium flowing through a supply channel wherein the meter comprises at least one peer-to-peer module configured to communicate with a peer-to-peer application of a peer-to-peer network, wherein the measuring module is configured to provide the measured quantity parameter of the supply medium to the peer-to-peer module via a communication connection arranged between the measuring module and the peer-to-peer module, wherein the peer-to-peer module is configured to provide at least the measured quantity parameter to the peer-to-peer application.

### SUMMARY OF THE INVENTION

The features of the methods and devices according to the present invention are defined in the independent claims, and the preferable features according to the present invention are defined in the dependent claims.

### I. Objects of the present invention

An object of the present invention is to provide a power trading system which adopts a block chain module to solve the problem that the power trading system in the prior art cannot collect, trade or record a power amount in distributed wind power energy and photovoltaic systems and storage batteries, and thus cannot meet the requirements of big data in the energy Internet. Thus, a power generation amount and a power consumption amount of distributed power generation systems, power storage systems and electrical power users can be measured, so that the power amount in a dispersed smart micro-grid can be measured, traded and recorded. Smart power meters at a distributed power generation side and power consumption side serve as a charge basis in trading, so that the economic feasibility of the micro-grid is higher.

### II. Technical solutions

To solve the above problem, the present invention provides a power trading system as defined in the appended claims.

### BRIEF DESCRIPTION OF THE DRAWINGS

Fig. 1 is a schematic architecture view of a power trading system provided by the present invention;
Fig. 2 is a schematic component view of a power trading system according to a first embodiment of the present invention;
Fig. 3 is a component view of a block chain power meter according to a second embodiment of the present invention;
Fig. 4 is a schematic component view of a power trading system according to a third embodiment of the present invention;
Fig. 5 is a component view of an energy Internet router according to a fourth embodiment of the present invention;
andFig. 6 is a schematic component view of a power trading system according to a fifth embodiment of the present invention.

Description of reference numerals: 100: block chain power meter; 101, 301: central processor; 102, 302: measurement module; 103, 403: block chain module; 1031, 4031: data layer; 1032, 4032: network layer; 1033, 4033: contract consensus layer; 104, 303, 404: communication module; 105, 304: digital signal module; 106, 305: protocol interface module; 107, 306: power supply module; 108, 307: display module; 109, 308: clock module; 200: block chain network; 300: conventional power meter; 400: energy Internet router; 401: control module; 402: acquisition module; and 405: power electronic conversion and energy storage module.

### DETAILED DESCRIPTION OF THE EMBODIMENTS

In order to explain the objects, technical solutions and advantages of the present invention more apparently, the present invention is further described in detail below with reference to the specific embodiments and accompanying drawings. It should be understood that these descriptions are merely exemplary and are not intended to limit the scope of the present invention. In addition, in the following description, descriptions of well-known structures and techniques are omitted to avoid unnecessarily obscuring the concepts of the present invention.

Technologies related to the block chain technology will be introduced first before describing a power trading system provided by the present invention in detail.

Bitcoin appeared in 2009 brought about a disruptive outcome-the block chain technology. A block chain is a secure account book-like database consisting of data blocks. Users can look for data in this block chain network which is continuously updated and upgraded. For financial institutions, the block chain can speed up a trading processing process, lower a cost, reduce the number of middlemen, improve market insight, and increase business transparency.

The block chain technology, as the underlying technology of the crypto currency Bitcoin, is a great innovation. The block chain technology can be used to combat fraud and illegal trading, and many industries are using the block chain technology. Particularly, the energy Internet technologies are also using the block chain technology as a tool. The block chain technology has the following functions. First, the fair block chain-based data ensures credibility, and the combined public and private key access authorization protects privacy, realizing complete privacy and credible calculation. Second, the block chain technology prevents falsification as subjects adopt a certain way to realize cooperative or compulsory trust, so as to achieve ubiquitous interaction under compulsory trust. Third, the block chain, big data and artificial intelligence technologies are combined to form a trustworthy oracle model to verify external data, so that self-discipline of virtual reality interaction is realized. Fourth, devices allocated based on the block chain technology make decisions in a peer-to-peer interactive manner, and do not need to entrust a centralized platform to make decisions, so that device democracy and distributive decision-making are realized by decentralization. Fifth, the subjects carry out stochastic game based on clear interaction rules, so that the system presents a neutral or benign evolution, thereby meeting the marketization law as well as the coordination and evolvability in competition evolution.

The block chain technology not only can realize disintermediation, but also may disrupt the market and existing value chains, and may create a new market by releasing undeveloped supply vitality. The combination of the block chain technology and an energy Internet measurement system will provide reliable technical support for future development of the energy Internet in power trading and measurement aspects.

### Embodiment 1

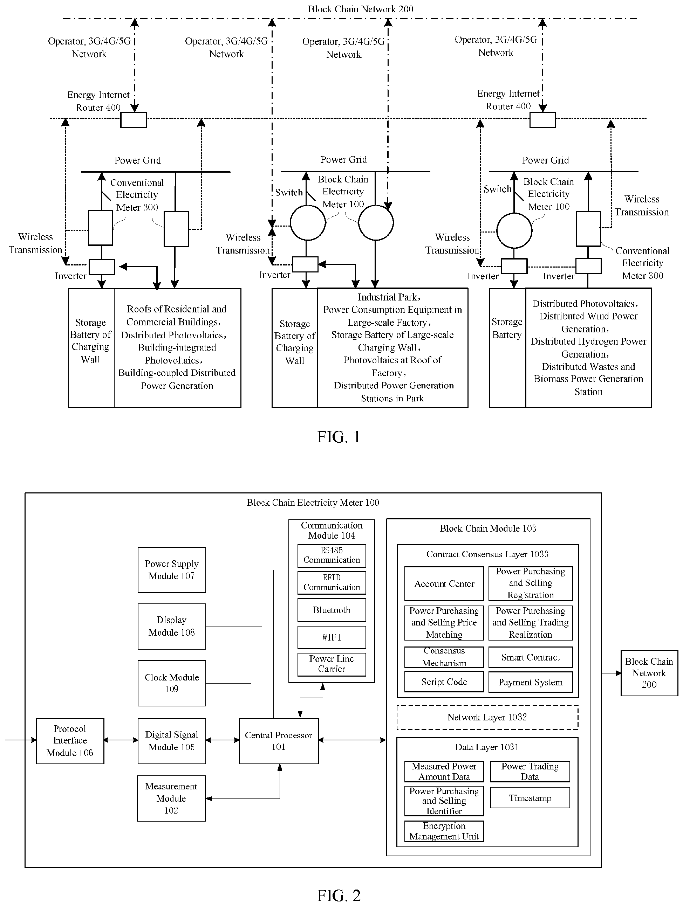

Fig. 1 is a schematic architecture view of a power trading system provided by the present invention.

Fig. 2 is a schematic component view of a power trading system according to a first embodiment of the present invention.

Referring to Figs. 1 and 2, the present invention provides a power trading system, comprising: a measurement module 102, a block chain module 103 and a communication module 104. The measurement module 102 is configured to bidirectionally or unidirectionally measure a power amount; the block chain module 103 uses the communication module 104 and an Internet-based block chain network 200 to realize peer-to-peer power trading among nodes within the block chain network 200 in a region; and the communication module 104 is configured to, by using the wireless or wired communication technology, transmit data between the measurement module 102 and the block chain module 103, and transmit data in the block chain network 200.

Referring to Fig. 2, in this embodiment, the power trading system further comprises a block chain power meter 100.

The measurement module 102, the block chain module 103 and the communication module 104 are arranged in block chain power meter 100.

A central processor 101 is further arranged in the block chain power meter 100 to process and calculate data in the block chain power meter 100, and control data exchange.

The measurement module 102 is connected to the central processor 101 for bidirectional or unidirectional measurement of a power amount. The bidirectional or unidirectional measurement here refers to measurement of a distributed power generation amount and a power storage amount as well as a power generation amount and a power consumption amount of electrical power users in two ways.

The block chain module 103 interacts with the central processor 101 in data to realize peer-to-peer power trading among nodes within the block chain network 200 in a region, measure a distributed power amount, and store trading data. The block chain module 103 is configured to realize power trading and recording, so that final power amount information and the peer-to-peer power trading information are stored in the block chain network 200 in a distributed and immutable manner.

The block chain module 103 is further configured to assign each block chain power meter 100 with a unique ID to form a node with the unique ID in the block chain network 200.

Optionally, the block chain module 103 uses a virtual currency or an electronic currency for power trading or settlement, so that the power trading system is suitable for power trading or settlement in a regional power grid. The block chain module 103 can realize trading or settlement between a purchaser and a seller through the virtual currency or the electronic currency. Particularly, the block chain module 103 and an operator of a power grid can set a virtual currency that is defined and circulated in this power grid to realize power trading or settlement. A power purchaser and a power seller in power purchasing and selling trading need setting a virtual currency account or an electronic currency account for power trading or settlement. With the use of the virtual currency and the electronic currency, the power trading or settlement in the regional power grid is more flexible and convenient, and safer.

Optionally, the block chain network 200 is a public chain, a private chain, or an alliance chain. All or part of nodes of the public chain, the private chain or the alliance chain have complex authorities of reading, writing and keeping accounts.

Referring to Fig. 2, the block chain module 103 is provided with a data layer 1031 for storing the following data: measured power amount data, power amount trading data, a power purchasing and selling identifier, and a timestamp. The data layer is further configured to add a timestamp onto power purchasing and selling trading data in each node to form a data block which is recorded in the block chain network 200 and is immutable.

The measured power amount data is measured by the measurement module 102. Particularly, the measured power amount data refers to power amount data measured by the measurement module 102 in the block chain power meter 100.

The power amount trading data is all peer-to-peer power trading data in the block chain network 200. Particularly, the power amount trading data refers to all peer-to-peer power trading data in the block chain network 200, and the data forms a data block which is recorded in the block chain network 200 and is immutable.

The power purchasing and selling identifier is configured to distinguish a power purchaser from a power seller.

The power purchasing and selling identifier refers to a binary character string having a predetermined meaning. A first set value of the binary character string represents that a current node is the power seller. That is, this node is connected to distributed power generation equipment or a storage battery, and sells power to another node. A second set value of the binary character string represents that a current node is the power purchaser. That is, the node is connected to power consumption equipment or a storage battery, and purchases power from another node. Here, the current node may be the power seller at a moment, and will become the power purchaser at the next moment (for example, this node is connected to a rechargeable storage battery). The first set value and the second set value adopt different binary character string values to represent a power purchasing identifier or a power selling identifier, respectively.

Optionally, the binary character string may be a single digit or multiple digits.

The first set value and the second set value include but are not limited to the following definitions.

Optionally, it is defined that the first set value 0 represents that the current node is a power purchaser, and the second set value 1 represents that the current node is a power seller, and vice versa. That is, it is defined that the first set value 1 represents that the current node is the power purchaser, and the second set value 0 represents that the current node is the power seller.

Optionally, it is defined that the first set value 00 represents that the current node is a power purchaser, and the second set value 11 represents the current node is a power seller, and vice versa.

Optionally, it is defined that the first set value 01 represents that the current node is a power purchaser, and the second set value 10 represents the current node is a power seller, and vice versa.

The timestamp is configured to record the peer-to-peer power trading time in the block chain network 200. Particularly, the timestamp is configured to record the peer-to-peer power trading time in the block chain network 200, the trading time being generated through the encryption technology.

In the present embodiment, the data layer 1031 comprises an encryption management unit which encrypts data through hardware or software and which is configured to manage private key information of a user.

The data layer 1031 further comprises one or a combination of a data block, a hash, Merkle tree root data, a peer-to-peer network, key management, public and private keys, asymmetric encryption and a verification mechanism.

In the present embodiment, the block chain module 103 is further provided with a network layer 1032. The network layer 1032 comprises a P2P networking mechanism, a data transmission mechanism, a data verification mechanism and the like, so that the block chain module 1032 has an automatic networking function.

The block chain module 103 is further provided with a contract consensus layer 1033 for automatically confirming power trading between the power purchaser and the power seller within the range of the block chain network 200 through a smart contract, the power trading content comprising a power trading price, a power trading amount and a trading condition.

The contract consensus layer 1033 comprises one or a combination of an account center unit, a power purchasing and selling registration unit, a power purchasing and selling price matching unit, a power purchasing and selling trading realization unit, a consensus mechanism unit, a smart contract unit, a script code unit and a payment system unit.

In this embodiment, the communication module 104 is connected to the central processor 101, and is configured to transmit data between the measurement module 102 and the block chain module 103 and transmit data in the block chain network 200. The block chain module 103 transmits data processed by the block chain module 103 to the block chain network 200 through the communication module 104, so as to realize the peer-to-peer power trading among the nodes within the block chain network 200 in the region.

Optionally, the communication module 104 is one or a combination of an RS485 communication module, an RFID module, a Bluetooth module, a WIFI module, a power line carrier module, a 3G network module, a 4G network module, a 5G network module and an Internet module. The present invention does not limit it. The communication module 104 may also be other pieces of communication equipment.

Optionally, wireless communication of a building side at the bottom layer adopts the radio frequency wireless transmission technology, so that the stability, security and confidentiality are more reliable, which is a technical support for guaranteeing stable operation of a charging and measuring system.

Referring to Fig. 2, in this embodiment, the block chain power meter 100 further comprises a digital signal module 105, a protocol interface module 106, a power supply module 107, a display module 108 and a clock module 109.

The digital signal module 105 is connected to the central processor 101, and is configured to collect a digital signal or an analog signal of the measurement module 102 and convert the analog signal into the digital signal.

The protocol interface module 106 is connected to the central processor 101, and is configured to manage a communication protocol interface and receive externally input data.

The power supply module 107 is connected to the central processor 101, and is configured to provide the block chain power meter 100 with a working power supply.

The display module 108 is connected to the central processor 101, and comprises a liquid crystal display screen for displaying related data. The present invention does not limit it, and the display screen may also be other types of display screens.

The clock module 109 is connected to the central processor 101 to provide the central processor 101 with an operating clock.

In the present embodiment, the components of the block chain power meter 100 in the power trading system comprise, but are not limited to the above-described components, and further comprise necessary components of a conventional power meter.

### Embodiment 2

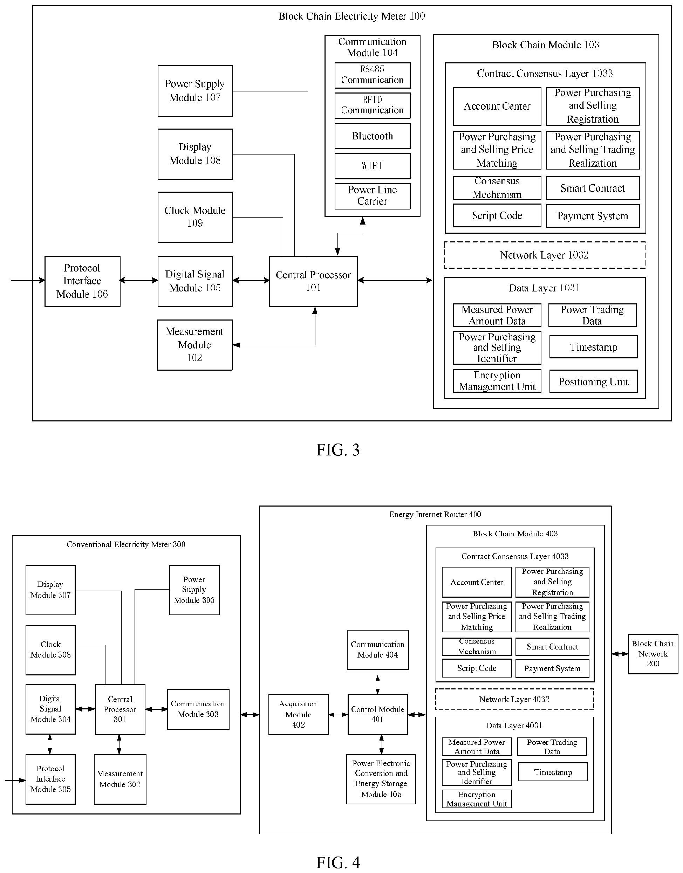

Fig. 3 is a component view of a smart power meter according to a second embodiment of the present invention.

Referring to Fig. 3, this embodiment differs from Embodiment 1 in that in this embodiment, the block chain module 103 in the block chain power meter 100 further comprises a positioning unit which is connected to the central processor 101 in the block chain power meter 100 and which is configured to position a geographical location of the block chain power meter 100.

In particular, the positioning unit in this embodiment is arranged in the data layer 1031, is connected to the central processor 101, and is configured to position the geographical location of the block chain power meter 100 to obtain geographical location information of a node in the block chain network 200. Thus, the geographical location informatization of the whole smart power grid is realized, which lays a foundation for achieving the most reasonable peer-to-peer automatic power trading in a block chain. That is, when it is prescribed in a block chain smart contract that quotations are the same, power trading between the nodes whose geographical distance is the shortest can be completed first. In this way, the electrical power transmission cost and loss are the lowest.

The positioning unit uses a GIS (Geographic Information System) positioning chip.

Other structures, components and connection relationships of the block chain power meter 100 in this embodiment are the same as those of the block chain power meter 100 in Embodiment 1, and will not be repeated herein.

### Embodiment 3

Fig. 4 is a schematic component view of a power trading system according to a third embodiment of the present invention.

Referring to Fig. 4, the power trading system provided by the present embodiment comprises a measurement module 302, a block chain module 403 and communication modules 303 and 404. The measurement module 302 is configured to bidirectionally or unidirectionally measure a power amount. The block chain module 403 uses the communication modules 303 and 404 and an Internet-based block chain network 200 to realize peer-to-peer power trading among nodes within the block chain network 200 in a region. The communication modules 303 and 404 are configured to, by using the wireless or wired communication technology, transmit data between the measurement module 302 and the block chain module 403, and transmit data in the block chain network 200.

This embodiment differs from Embodiment 1 in that the arranged location of the block chain module 403 is different from that of the block chain module 403 in Embodiment 1.

In the present embodiment, the power trading system further comprises a conventional power meter 300 and an energy Internet router 400. The measurement module 302 and the communication module303 are arranged in the conventional meter 300. The block chain module 403 and the communication module 404 are arranged in the energy Internet router 400.

In this embodiment, the energy Internet router 400 further comprises: a control module 401 and an acquisition module 402. The control module 401 is configured to control energy exchange between a plurality of distributed energy stations and a plurality of distributed energy users, routing management and peer-to-peer power trading within the same local area network. The acquisition module 402 is connected to the control module 401 and is configured to acquire measured power amount data of the conventional power meter 300. The block chain module 403 interacts with the control module 401 in data. The communication module 404 is connected to the control module 401.

The block chain module 403 is further configured to assign each energy Internet router 500 with a unique ID to form a node with the unique ID in the block chain network 200.

Optionally, the block chain module 403 uses a virtual currency or an electronic currency for power trading or settlement, so that the power trading system is suitable for power trading or settlement in a regional power grid. The block chain module 403 can realize trading or settlement between a purchaser and a seller through the virtual currency or the electronic currency. Particularly, the block chain module 403 and an operator of a power grid can set a virtual currency that is defined and circulated in this power grid to realize power trading or settlement. A power purchaser and a power seller in power purchasing and selling trading need setting a virtual currency account or an electronic currency account for power trading or settlement. With the use of the virtual currency and the electronic currency, the power trading or settlement in the regional power grid is more flexible and convenient, and safer.

Optionally, the block chain network 200 is a public chain, a private chain, or an alliance chain. All or part of nodes of the public chain, the private chain or the alliance chain have complex authorities of reading, writing and keeping accounts.

Referring to Fig. 4, in the present embodiment, the block chain module 403 is provided with a data layer 4031 for storing the following data: measured power amount data, power amount trading data, a power purchasing and selling identifier, and a timestamp. The data layer is further configured to add a timestamp onto power purchasing and selling trading data in each node to form a data block which is recorded in the block chain network 200 and is immutable.

The measured power amount data is measured by the measurement module 302. Particularly, the measured power amount data refers to power amount data measured by the measurement module 302 in the conventional power meter 300.

The power amount trading data is all peer-to-peer power trading data in the block chain network 200. Particularly, the power trading data refers to all peer-to-peer power trading data in the block chain network 200, and the data forms a data block which is recorded in the block chain network 200 and is immutable.

The power purchasing and selling identifier is configured to distinguish a power purchaser from a power seller. The definition manner of the power purchasing and selling identifier in this embodiment is the same as that in Embodiment 1, and thus will not be repeated herein.

The timestamp is configured to record the peer-to-peer power trading time in the block chain network 200. Particularly, the timestamp is configured to record the peer-to-peer power trading time in the block chain network 200, the trading time being generated through the encryption technology.

In the present embodiment, the data layer 4031 comprises an encryption management unit which encrypts data through hardware or software and which is configured to manage private key information of a user.

The data layer 4031 further comprises one or a combination of a data block, a hash, Merkle tree root data, a peer-to-peer network, key management, public and private keys, asymmetric encryption and a verification mechanism.

In the present embodiment, the block chain module 403 is further provided with a network layer 4032. The network layer 4032 comprises a P2P networking mechanism, a data transmission mechanism, a data verification mechanism and the like, so that the block chain module 403 has an automatic networking function.

In the present embodiment, the block chain module 403 is further provided with a contract consensus layer 4033 for automatically confirming power trading between the power purchaser and the power seller within the range of the block chain network 200 through a smart contract, the power trading content comprising a power trading price, a power trading amount and a trading condition.

Components of the contract consensus layer 4033 here are the same as those in Embodiment 1, and thus will not be repeated herein.

In this embodiment, the conventional power meter 300 further comprises a central processor 301, a communication module 303, a digital signal module 304, a protocol interface module 305, a power supply module 306, a display module 307 and a clock module 308.

The central processor 301 is configured to process and calculate data in the conventional power meter 300, and control data exchange.

The communication interface 303 is connected to the central processor 301, and is configured to transmit data.

The digital signal module 304 is connected to the central processor 301, and is configured to collect a digital signal or an analog signal of the measurement module 302, and convert the analog signal into the digital signal.

The protocol interface module 305 is connected to the central processor 301, and is configured to manage a communication protocol interface and receive externally input data.

The power supply module 306 is connected to the central processor 301, and is configured to provide the conventional power meter 300 with a working power supply.

The display module 307 is connected to the central processor 301, and comprises a liquid crystal display screen for displaying related data. The present invention does not limit it, and the display screen may also be other types of display screens.

The clock module 308 is connected to the central processor 301 to provide the central processor 301 with an operating clock.

In the present embodiment, the components of the conventional power meter 300 comprise, but are not limited to the above-described components.

In this embodiment, the communication modules 303 and 404 are configured to transmit data between the measurement module 302 in the conventional power meter 300 and the block chain module 403 in the energy Internet router 400, and transmit data in the block chain network 200.

Optionally, the communication module 303 or 404 is one or a combination of an RS485 communication module, an RFID module, a Bluetooth module, a WIFI module, a power line carrier module, a 3G network module, a 4G network module, a 5G network module and an Internet module. The present invention does not limit it. The communication module 303 or 404 may also be other pieces of communication equipment.

Optionally, wireless communication of a building side at the bottom layer adopts the radio frequency wireless transmission technology, so that the stability, security and confidentiality are more reliable, which is a technical support for guaranteeing stable operation of a charging and measuring system.

The conventional power meter 300 is a bidirectional power meter.

Since the conventional power meter 300 is a bidirectional smart power meter, the measurement module 302 can realize bidirectional or unidirectional measurement, so that the conventional power meter300 can bidirectionally measure a power amount. Through the combined use of the energy Internet router 400 and the bidirectional smart power meter, the energy Internet router 400 can be not only used in energy exchange among a plurality of distributed energy networks, routing management and synergetic load consumption of wind energy, solar energy and stored energy in the same local area network, but also used to acquire measured power amount data. Thus, in the power trading system, a power generation amount and a power consumption amount of distributed power generation systems, power storage systems and electrical power users can be measured bidirectionally, and the power amount in a dispersed smart micro-grid can be measured, traded and recorded. The energy Internet router 400 at a distributed power generation side and power consumption side serve as a charge basis in trading, so that the economic feasibility of the micro-grid is higher. Meanwhile, people can intelligently manage and monitor their own distributed power generation, storage and consumption facilities by using various mobile terminals.

In the present embodiment, the components of the energy Internet router 400 in the power trading system comprise, but are not limited to the above-described components, and further comprise necessary components of a conventional energy Internet router.

### Embodiment 4

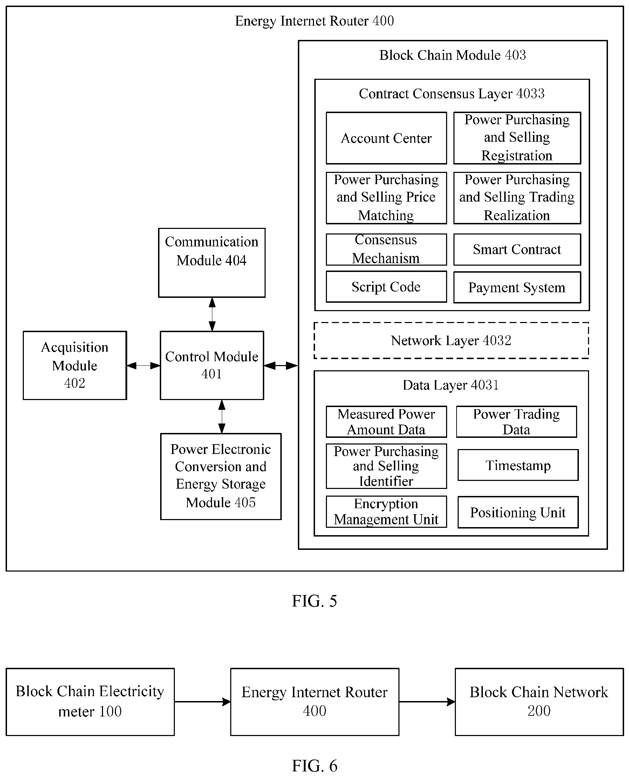

Fig. 5 is a component view of an energy Internet router according to a fourth embodiment of the present invention.

Referring to Fig.5, this embodiment differs from Embodiment 3 in that in this embodiment, the energy Internet router 400 in the block chain module 403 further comprises a positioning unit which is connected to the control module 401 in the energy Internet router 400 and which is configured to position a geographical location of the energy Internet router 400.

In particular, the positioning unit in this embodiment is arranged in the data layer 4031, is connected to the control module 401, and is configured to position the geographical location of the energy Internet router 400 to obtain geographical location information of a node in the block chain network 200. Thus, the geographical location informatization of the whole smart power grid is realized, which lays a foundation for achieving the most reasonable peer-to-peer automatic power trading in a block chain. That is, when it is prescribed in a block chain smart contract that quotations are the same, power trading between the nodes whose geographical distance is the shortest can be completed first. In this way, the electrical power transmission cost and loss are the lowest.

The positioning unit uses a GIS positioning chip.

Other structures, components and connection relationships of the energy Internet router 400 in this embodiment are the same as those of the energy Internet router 400 in Embodiment 3, and thus will not be repeated herein.

### Embodiment 5

Fig. 6 is a schematic component view of a power trading system according to a fifth embodiment of the present invention.

Referring to Fig. 6, in the power trading system in this embodiment, the block chain power meter 100 transmits data to the block chain network 200 through the energy Internet router 400.

Structures, components and connection relationships of the block chain power meter 100 in this embodiment are the same as those of the block chain power meter 100 in Embodiment 1 or 2, and thus will not be repeated herein. Structures, components and connection relationships of the energy Internet router 400 in this embodiment are the same as those of the energy Internet router 400 in Embodiment 3 or 4, and thus will not be repeated herein.

In this embodiment, through the combined use of the block chain power meter 100 and the energy Internet router 400, the energy Internet router 400 is mainly used in energy exchange among source networks of a plurality of distributed energy Internet routers 400, routing management and synergetic load consumption of wind energy, solar energy and stored energy in the same local area network. The block chain power meter 100 with the block chain module 103 is configured to bidirectionally measure a power generation amount and a power consumption amount of distributed power generation systems, power storage systems and electrical power users, measure a power amount in a dispersed smart micro-grid, realize trading in the grid, and record the trading.

In this embodiment, the energy Internet router 400 is connected to the block chain power meter 100, so that data interaction between the energy Internet router 400 and the central processor 101 in the block chain power meter 100 is realized.

### Embodiment 6

In this embodiment, the block chain network 200 is an alliance chain. In general, users included in the alliance chain are power purchasing and selling users within a coverage of a regional smart micro-grid or a province/municipality power grid. A rewiring authorization and an account keeping participation authorization on the alliance chain are regulated based on organization rules of the block chain network200 in the regional power grid. Contents of data disclosed to nodes having different authorization levels in the regional power grid are different.

### Embodiment 7

In this embodiment, the block chain network 200 is a private chain. In general, users included in the private chain are power purchasing and selling users within a coverage of a regional smart micro-grid. A rewiring authorization and an account keeping participation authorization on the alliance chain are regulated based on organization rules of the block chain network 200 in the regional power grid. Data is only disclosed to nodes within the regional power grid, rather than the general public.

The present invention aims to protect a power trading system. By providing the block chain module for power trading and recording, final power amount information and peer-to-peer power trading information can be stored in the block chain network in a distributed and immutable manner. Through the power trading system provided by the present invention, a power generation amount and a power consumption amount of distributed power generation systems, power storage systems and electrical power users can be measured, so that the power amount in a dispersed smart micro-grid can be measured, traded and recorded. The block chain power meter or the conventional power meter at a distributed power generation side and power consumption side serve as a charge basis in trading, so that the economic feasibility of the micro-grid is higher. Meanwhile, people can intelligently manage and monitor their own distributed power generation, storage and consumption facilities by using various mobile terminals. Therefore, the power trading system provided by the present invention will have a broader market space and will surely become a major provider for big data in the future energy Internet.

It should be understood that the above specific embodiments of the present invention are only used to illustratively describe or explain the principle of the present invention, and are not intended to limit the present invention. Therefore, any modifications, equivalent replacements, improvements and the like made without departing from the scope of the present invention shall be included in the protection scope of the present invention. Moreover, the appended claims of the present invention are intended to cover all changes and modifications that fall within the scope and the borderline of the appended claims.

## Claims

1. A power trading system, comprising:
a measurement module (102, 302), a block chain module (103, 403) and a communication module (104, 303, 404), wherein
the measurement module (102, 302) is configured to bidirectionally or unidirectionally measure a power amount, wherein the measurement module (102, 302) is arranged in a block chain power meter (100) and/or a conventional power meter (300), each of the block chain power meter (100) and the conventional power meter having one end connected to a power grid, and having the other end connected to at least one of a storage battery and a distributed power generation system;
the block chain module (103, 403) is configured to use the communication module (104, 303, 404) and an Internet-based block chain network (200) to realize peer-to-peer power trading among nodes within the block chain network (200) in a region, wherein the block chain module (103, 403) is configured to store measured power amount data and power amount trading data; and
the communication module (104, 303, 404) is configured to, by using the wireless or wired communication technology, transmit data between the measurement module (102, 302) and the block chain module (103, 403), and transmit data in the block chain network (200),
wherein the power trading system further comprises:
the block chain power meter (100), wherein
the measurement module (102), the block chain module (103) and the communication module (104) are arranged in the block chain power meter (100);
a central processor (101) is further arranged in the block chain power meter (100);
the measurement module (102) is connected to the central processor (101);
the block chain module (103) is configured to interact with the central processor (101) in data; and
the communication module (104) is connected to the central processor (101), and is configured to transmit data between the measurement module (102) and the block chain module (103) and transmit data in the block chain network (200); or
the conventional power meter (300) and an energy Internet router (400), wherein
the measurement module (302) and the communication module (303) are arranged in the conventional power meter (300);
the block chain module (403) and the communication module (404) are arranged in the energy Internet router (400); and
the communication modules (303, 404) are configured to transmit data between the measurement module (302) in the conventional power meter (300) and the block chain module (403) in the energy Internet router (400), and transmit data in the block chain network (200),
wherein the block chain module (103, 403) comprises:
a contract consensus layer (1033, 4033) arranged for automatically confirming power trading between the power purchaser and the power seller within the range of the block chain network (200) through a smart contract; and
a positioning unit arranged in a data layer (1031, 4031) and configured to position geographical location to obtain geographical location information of a node in the block chain network (200), in such a way that it is prescribed in the smart contract that when quotations are the same, power trading between the nodes whose geographical distance is the shortest can be completed, wherein the positioning unit uses a Geographic Information System, GIS, positioning chip, wherein the block chain module (103, 403) is provided with a data layer (1031, 4031) for storing the following data:
measured power amount data measured by the measurement module (102, 302);
power amount trading data which is all peer-to-peer power trading data in the block chain network (200);
a time stamp for recording peer-to-peer power trading time in the block chain network (200),
wherein the data layer (1031, 4031) is further configured to add a timestamp onto power purchasing and selling trading data in each node to form a data block which is recorded in the block chain network (200) and is immutable, and
**characterized in that**, the block chain module (103, 403) is further configured for storing the following data in the data layer:
a power purchasing and selling identifier which is configured to distinguish a power purchaser from a power seller; and
wherein the power purchasing and selling identifier refers to a binary character string having a predetermined meaning used for representing whether a current node in the block chain network (200) is the power purchaser or the power seller at different moments;
a first set value of the binary character string represents that the current node is the power seller; and a second set value of the binary character string represents that the current node is the power purchaser.

2. The power trading system of claim 1, wherein the positioning unit of the block chain module (103) is connected to the central processor (101) in the block chain power meter (100) and is configured to position a geographical location of the block chain power meter (100).

3. The power trading system of claim 1, wherein
the block chain module (103) is further configured to assign each block chain power meter (100) with a unique ID to form a node with the unique ID in the block chain network (200).

4. The power trading system of claim 1, wherein the energy Internet router (400) further comprises:
a control module (401) configured to control energy exchange between a plurality of distributed energy stations and a plurality of distributed energy users, routing management and peer-to-peer power trading within the same local area network; and
an acquisition module (402) connected to the control module (401) and configured to acquire measured power amount data of the conventional power meter (300), wherein
the block chain module (403) is configured to interact with the control module (401) in data; and
the communication module (404) is connected to the control module (401).

5. The power trading system of claim 4, wherein the positioning unit of the block chain module (403) is connected to the control module (401) in the energy Internet router (400) and is configured to position a geographical location of the

6. The power trading system of claim 1, wherein
the block chain module (403) is further configured to assign each energy Internet router (400) with a unique ID to form a node with the unique ID in the block chain network (200).

7. The power trading system of claim 1, wherein
the data layer (1031, 4031) comprises an encryption management unit which is configured to encrypt data through hardware or software and which is configured to manage private key information of a user; and
the data layer (1031, 4031) further comprises one or a combination of a data block, a hash, Merkle tree root data, a peer-to-peer network, key management, public and private keys, asymmetric encryption and a verification mechanism.

8. The power trading system of claim 1, wherein
the power trading content comprises a power trading price, a power trading amount and a trading condition.

9. The power trading system of claim 8, wherein
the contract consensus layer (1033, 4033) comprises one or a combination of an account center unit, a power purchasing and selling registration unit, a power purchasing and selling price
matching unit, a power purchasing and selling trading realization unit, a consensus mechanism unit, a smart contract unit, a script code unit and a payment system unit.

10. The power trading system of claim 1, wherein
the block chain module (103, 403) is configured to use a virtual currency or an electronic currency for power trading or settlement.
the block chain network (200) is a public chain, a private chain, or an alliance chain; and
all or part of nodes of the public chain, the private chain or the alliance chain have complex authorities of reading, writing and keeping accounts.

11. The power trading system of claim 1, wherein
the communication module (104, 303, 404) is one or a combination of an RS485 communication module, an RFID module, a Bluetooth module, a WIFI module, a power line carrier module, a 3G network module, a 4G network module, a 5G network module and an Internet module.

## Patentansprüche

1. Stromhandelsystem, umfassend
ein Messmodul (102, 302), ein Blockketten-Modul (103, 403) und ein Kommunikationsmodul (104, 303, 404), wobei
das Messmodul (102, 302) konfiguriert ist, um bidirektional oder unidirektional eine Leistungsmenge zu messen, wobei das Messmodul (102, 302) in einem Blockketten-Stromzähler (100) und/oder einem konventionellen Stromzähler (300) angeordnet ist, wobei jeder von dem Blockketten-Stromzähler (100) und dem konventionellen Stromzähler ein Ende aufweist, das mit einem Stromnetz verbunden ist, und dessen andere Ende mit mindestens einem von einer Speicherbatterie und einem dezentralen Stromerzeugungssystem verbunden ist;
das Blockketten-Modul (103, 403) konfiguriert ist, um das Kommunikationsmodul (104, 303, 404) und ein internetbasiertes Blockketten-Netzwerk (200) zu verwenden, um einen Peer-to-Peer-Stromhandel zwischen Knoten innerhalb des Blockketten-Netzwerks (200) in einer Region zu realisieren, wobei das Blockketten-Modul (103, 403) konfiguriert ist, um gemessene Strommengendaten und Strommengen-Handelsdaten zu speichern; und
das Kommunikationsmodul (104, 303, 404) konfiguriert ist, um unter Verwendung der drahtlosen oder drahtgebundenen Kommunikationstechnologie Daten zwischen dem Messmodul (102, 302) und dem Blockketten-Modul (103, 403) zu übertragen und Daten in dem Blockketten-Netzwerk (200) zu übertragen,
wobei das Stromhandelsystem ferner Folgendes umfasst:
den Blockketten-Stromzähler (100), wobei
das Messmodul (102), das Blockketten-Modul (103) und das Kommunikationsmodul (104) in dem Blockketten-Stromzähler (100) angeordnet sind;
ein zentraler Prozessor (101) ferner in dem Blockketten-Stromzähler (100) angeordnet ist;
das Messmodul (102) mit dem zentralen Prozessor (101) verbunden ist;
das Blockketten-Modul (103) konfiguriert ist, um mit dem zentralen Prozessor (101) in Daten zu interagieren; und
das Kommunikationsmodul (104) mit dem zentralen Prozessor (101) verbunden und konfiguriert ist, um Daten zwischen dem Messmodul (102) und dem Blockketten-Modul (103) zu übertragen und Daten in dem Blockketten-Netzwerk (200) zu übertragen; oder
den konventionellen Stromzähler (300) und einen Energie-Internetrouter (400), wobei
das Messmodul (302) und das Kommunikationsmodul (303) in dem konventionellen Stromzähler (300) angeordnet sind;
das Blockketten-Modul (403) und das Kommunikationsmodul (404) in dem Energie-Internetrouter (400) angeordnet sind; und
die Kommunikationsmodule (303, 404) konfiguriert sind, um Daten zwischen dem Messmodul (302) in dem konventionellen Stromzähler (300) und dem Blockketten-Modul (403) in dem Energie-Internetrouter (400) zu übertragen und Daten in dem Blockketten-Netzwerk (200) zu übertragen,
wobei das Blockketten-Modul (103, 403) Folgendes umfasst:
eine Vertragskonsensschicht (1033, 4033), die angeordnet ist, um einen Stromhandel zwischen dem Stromkäufer und dem Stromverkäufer innerhalb der Reichweite des Blockketten-Netzwerks (200) durch einen intelligenten Vertrag automatisch zu bestätigen; und
eine Positionierungseinheit, die in einer Datenschicht (1031,4031) angeordnet und konfiguriert ist, um den geografischen Standort zu positionieren, um geografische Standortinformationen eines Knotens in dem Blockketten-Netzwerk (200) zu erlangen, sodass in dem intelligenten Vertrag vorgeschrieben ist, dass bei gleichen Notierungen der Stromhandel zwischen den Knoten, deren geografische Entfernung am geringsten ist, abgeschlossen werden kann, wobei die Positionierungseinheit einen Positionierungschip für Geographie Information System, GIS, verwendet,
wobei das Blockketten-Modul (103, 403) mit einer Datenschicht (1031, 4031) zum Speichern der folgenden Daten versehen ist:
gemessene Strommengendaten, die von dem Messmodul (102, 302) gemessen werden;
Strommengen-Handelsdaten, die alle Peer-to-Peer-Energiehandelsdaten in dem Blockketten-Netzwerk (200) sind; einen Zeitstempel zum Aufzeichnen der Peer-to-Peer-Stromhandelszeit in dem Blockchain-Netzwerk (200), wobei die Datenschicht (1031, 4031) ferner konfiguriert ist, um den Stromkauf- und -verkaufs-Handelsdaten in jedem Knoten einen Zeitstempel hinzuzufügen, um einen Datenblock zu bilden, der in dem Blockchain-Netzwerk (200) aufgezeichnet wird und unveränderlich ist, und **dadurch gekennzeichnet, dass** das Blockketten-Modul (103, 403) ferner konfiguriert ist, um die folgenden Daten in der Datenschicht zu speichern:
eine Stromkauf- und -verkaufskennung, die konfiguriert ist, um einen Stromkäufer von einem Stromverkäufer zu unterscheiden; und
wobei sich die Stromkauf- und -verkaufskennung auf eine binäre Zeichenkette bezieht, die eine vorbestimmte Bedeutung aufweist, die verwendet wird, um darzustellen, ob ein aktueller Knoten in dem Blockketten-Netzwerk (200) zu verschiedenen Zeitpunkten der Stromeinkäufer oder der Stromverkäufer ist;
ein erster gesetzter Wert der binären Zeichenkette bedeutet, dass der aktuelle Knoten der Stromverkäufer ist; und ein zweiter gesetzter Wert der binären Zeichenkette bedeutet, dass der aktuelle Knoten der Stromkäufer ist.

2. Stromhandelssystem nach Anspruch 1, wobei die Positionierungseinheit des Blockketten-Moduls (103) mit dem Zentralprozessor (101) in dem Blockketten-Stromzähler (100) verbunden und konfiguriert ist, um sie einen geografischen Standort des Blockketten-Stromzählers (100) zu positionieren.

3. Stromhandelssystem nach Anspruch 1, wobei
das Blockketten-Modul (103) ferner konfiguriert ist, um jedem Blockkettenstromzähler (100) eine eindeutige ID zuzuweisen, um einen Knoten mit der eindeutigen ID in dem Blockketten-Netzwerk (200) zu bilden.

4. Stromhandelssystem nach Anspruch 1, wobei der Energie-Internetrouter (400) ferner Folgendes umfasst:
ein Steuermodul (401), das konfiguriert ist, um einen Energieaustausch zwischen einer Vielzahl von verteilten Energiestationen und einer Vielzahl von verteilten Energieverbrauchern, Routing-Management und Peer-to-Peer-Stromhandel innerhalb desselben lokalen Netzwerks zu steuern; und
ein Erfassungsmodul (402), das mit dem Steuermodul (401) verbunden und konfiguriert ist, um gemessene Strommengendaten des konventionellen Stromzählers (300) zu erfassen, wobei
das Blockketten-Modul (403) konfiguriert ist, um mit dem Steuermodul (401) in Daten zu interagieren; und
das Kommunikationsmodul (404) mit dem Steuermodul (401) verbunden ist.

5. Stromhandelsystem nach Anspruch 4, wobei die Positionierungseinheit des Blockketten-Moduls (403) mit dem Steuermodul (401) in dem Energie-Internetrouter (400) verbunden und konfiguriert ist, um einen geografischen Standort des Energie-Internetrouters (400) zu positionieren.

6. Stromhandelssystem nach Anspruch 1, wobei
das Blockketten-Modul (403) ferner konfiguriert ist, um jedem Energie-Internetrouter (400) eine eindeutige ID zuzuweisen, um einen Knoten mit der eindeutigen ID in dem Blockketten-Netzwerk (200) zu bilden.

7. Stromhandelssystem nach Anspruch 1, wobei
die Datenschicht (1031,4031) eine Verschlüsselungsmanagementeinheit umfasst, die konfiguriert ist, um Daten durch Hardware oder Software zu verschlüsseln und die konfiguriert ist, um private Schlüsselinformationen eines Benutzers zu verwalten; und
die Datenschicht (1031, 4031) ferner eine oder eine Kombination aus einem Datenblock, einem Hash, Merkle-Baum-Stammdaten, einem Peer-to-Peer-Netz, einer Schlüsselverwaltung, öffentlichen und privaten Schlüsseln, asymmetrischer Verschlüsselung und einem Überprüfungsmechanismus umfasst.

8. Stromhandelssystem nach Anspruch 1, wobei
der Stromhandelsinhalt einen Stromhandelspreis, eine Stromhandelsmenge und eine Handelsbedingung umfasst.

9. Stromhandelssystem nach Anspruch 8, wobei
die Vertragskonsensschicht (1033, 4033) eine oder eine Kombination aus einer Kontostelleneinheit, einer Stromeinkaufs- und -verkaufsregistrierungseinheit, einem Stromeinkaufs- und -verkaufspreis-Abgleichseinheit,
einer Stromeinkauf- und -verkauf-Handelsdurchführungseinheit, einer Konsensmechanismuseinheit, einer intelligenten Vertragseinheit, einer Skriptcode-Einheit und einer Zahlungssystemeinheit umfasst.

10. Stromhandelssystem nach Anspruch 1, wobei
das Blockketten-Modul (103, 403) konfiguriert ist, um eine virtuelle Währung oder eine elektronische Währung für den Stromhandel oder die Abrechnung zu verwenden.
das Blockchain-Netzwerk (200) eine öffentliche Kette, eine private Kette oder eine Allianzkette ist; und
alle oder ein Teil der Knoten der öffentlichen Kette, der privaten Kette oder der Allianzkette komplexe Befugnisse zum Lesen, Schreiben und Führen von Konten aufweisen.

11. Stromhandelssystem nach Anspruch 1, wobei
das Kommunikationsmodul (104, 303, 404) eine oder eine Kombination aus einem RS485-Kommunikationsmodul, einem RFID-Modul, einem Bluetooth-Modul, einem WIFI-Modul, einem Netzbetreibermodul, einem 3G-Netzwerkmodul, einem 4G-Netzwerkmodul, einem 5G-Netzwerkmodul und einem Internetmodul ist.

## Revendications

1. Système d'échange d'électricité, comprenant :
un module de mesure (102, 302), un module de chaîne de blocs (103, 403) et un module de communication (104, 303, 404), dans lequel
le module de mesure (102, 302) est conçu pour mesurer de manière bidirectionnelle ou unidirectionnelle une quantité d'électricité, dans lequel le module de mesure (102, 302) est agencé dans un compteur électrique de chaîne de blocs (100) et/ou un compteur électrique conventionnel (300), chacun parmi le compteur électrique de chaîne de blocs (100) et le compteur électrique conventionnel ayant une extrémité reliée à un réseau électrique, et ayant l'autre extrémité reliée à au moins l'un parmi une batterie rechargeable et un système de génération d'électricité distribuée ;
le module de chaîne de blocs (103, 403) étant conçu pour utiliser le module de communication (104, 303, 404) et un réseau de chaîne de blocs basé sur Internet (200) pour réaliser un échange d'électricité d'égal à égal entre des nœuds à l'intérieur du réseau de chaîne de blocs (200) dans une région, dans lequel le module de chaîne de blocs (103, 403) est conçu pour stocker des données de quantité d'électricité mesurée et des données d'échange de quantité d'électricité ; et
le module de communication (104, 303, 404) est conçu, en utilisant la technologie de communication sans fil ou câblée, pour transmettre des données entre le module de mesure (102, 302) et le module de chaîne de blocs (103, 403), et transmettre des données dans le réseau de chaîne de blocs (200),
le système d'échange d'électricité comprend en outre :
le compteur électrique de chaîne de blocs (100), dans lequel
le module de mesure (102), le module de chaîne de blocs (103) et le module de communication (104) sont agencés dans le compteur électrique de chaîne de blocs (100) ;
un processeur central (101) est en outre agencé dans le compteur électrique de chaîne de blocs (100) ;
le module de mesure (102) est relié au processeur central (101) ;
le module de chaîne de blocs (103) est conçu pour interagir avec le processeur central (101) dans les données ; et
le module de communication (104) est relié au processeur central (101), et est conçu pour transmettre des données entre le module de mesure (102) et le module de chaîne de blocs (103) et transmettre des données dans le réseau de chaîne de blocs (200) ; ou
le compteur électrique conventionnel (300) et un routeur Internet d'énergie (400), dans lequel
le module de mesure (302) et le module de communication (303) sont agencés dans le compteur électrique conventionnel (300) ;
le module de chaîne de blocs (403) et le module de communication (404) sont agencés dans le routeur Internet d'énergie (400) ; et
les modules de communication (303, 404) sont conçus pour transmettre des données entre le module de mesure (302) dans le compteur électrique conventionnel (300) et le module de chaîne de blocs (403) dans le routeur Internet d'énergie (400), et transmettre des données dans le réseau de chaîne de blocs (200),
dans lequel le module de chaîne de blocs (103, 403) comprend :
une couche de consensus de contrat (1033, 4033) conçue pour confirmer automatiquement un échange d'électricité entre l'acheteur d'électricité et le vendeur d'électricité à l'intérieur du réseau de chaîne de blocs (200) par l'intermédiaire d'un contrat intelligent ; et
une unité de positionnement agencée dans une couche de données (1031, 4031) et conçue pour positionner l'emplacement géographique afin d'obtenir des informations d'emplacement géographique d'un nœud dans le réseau de chaîne de blocs (200), de telle sorte qu'il est prescrit dans le contrat intelligent que lorsque les cotations sont les mêmes, l'échange d'électricité entre les nœuds dont la distance géographique est la plus courte peut être achevé, dans lequel l'unité de positionnement utilise une puce de positionnement de système d'information géographique, SIG,
dans lequel le module de chaîne de blocs (103, 403) est pourvu d'une couche de données (1031, 4031) permettant de stocker les données suivantes :
des données de quantité d'électricité mesurée mesurées par le module de mesure (102, 302) ;
des données d'échange de quantité d'électricité qui sont toutes des données d'échange d'électricité d'égal à égal dans le réseau de chaîne de blocs (200) ; un horodateur permettant d'enregistrer le temps d'échange d'électricité d'égal à égal dans le réseau de chaîne de blocs (200), dans lequel la couche de données (1031, 4031) est en outre conçue pour ajouter un horodateur aux données d'échange d'achat et de vente d'électricité dans chaque nœud pour former un bloc de données qui est enregistré dans le réseau de chaîne de blocs (200) et est immuable, et **caractérisé en ce que**, le module de chaîne de blocs (103, 403) est en outre conçu pour stocker les données suivantes dans la couche de données :
un identifiant d'achat et de vente d'électricité qui est conçu pour distinguer un acheteur d'électricité d'un vendeur d'électricité ; et
dans lequel l'identifiant d'achat et de vente d'électricité se réfère à une chaîne de caractères binaires ayant une signification prédéterminée utilisée pour représenter si un nœud actuel dans le réseau de chaîne de blocs (200) est l'acheteur d'électricité ou le vendeur d'électricité à différents moments ;
une première valeur définie de la chaîne de caractères binaires représente le fait que le nœud actuel est le vendeur d'électricité ; et une seconde valeur définie de la chaîne de caractères binaires représente le fait que le nœud actuel est l'acheteur d'électricité.

2. Système d'échange d'électricité selon la revendication 1, dans lequel l'unité de positionnement du module de chaîne de blocs (103) est reliée au processeur central (101) dans le compteur électrique de chaîne de blocs (100) et est conçue pour positionner un emplacement géographique du compteur électrique de chaîne de blocs (100).

3. Système d'échange d'électricité selon la revendication 1, dans lequel
le module de chaîne de blocs (103) est en outre conçu pour attribuer à chaque compteur électrique de chaîne de blocs (100) un ID unique pour former un nœud avec l'ID unique dans le réseau de chaîne de blocs (200).

4. Système d'échange d'électricité selon la revendication 1, dans lequel le routeur Internet d'énergie (400) comprend en outre :
un module de commande (401) conçu pour commander l'échange d'énergie entre une pluralité de stations d'énergie distribuée et une pluralité d'utilisateurs d'énergie distribuée, la gestion du routage et l'échange d'électricité d'égal à égal au sein du même réseau local ; et
un module d'acquisition (402) relié au module de commande (401) et conçu pour acquérir des données de quantité d'électricité mesurée du compteur électrique conventionnel (300), dans lequel
le module de chaîne de blocs (403) est conçu pour interagir avec le module de commande (401) dans les données ; et
le module de communication (404) est relié au module de commande (401).

5. Système d'échange d'électricité selon la revendication 4, dans lequel l'unité de positionnement du module de chaîne de blocs (403) est reliée au module de commande (401) dans le routeur Internet d'énergie (400) et est conçue pour positionner un emplacement géographique du routeur Internet d'énergie (400).

6. Système d'échange d'électricité selon la revendication 1, dans lequel
le module de chaîne de blocs (403) est en outre conçu pour attribuer à chaque routeur Internet d'énergie (400) un ID unique pour former un nœud avec l'ID unique dans le réseau de chaîne de blocs (200).

7. Système d'échange d'électricité selon la revendication 1, dans lequel
la couche de données (1031, 4031) comprend une unité de gestion de chiffrement qui est conçue pour chiffrer des données par l'intermédiaire d'un matériel ou d'un logiciel et qui est conçue pour gérer des informations de clé privée d'un utilisateur ; et
la couche de données (1031, 4031) comprend en outre l'un parmi ou une combinaison d'un bloc de données, d'une valeur de hachage, de données de racine d'arbre de Merkle, d'un réseau d'égal à égal, d'une gestion de clés, de clés publiques et privées, d'un chiffrement asymétrique et d'un mécanisme de vérification.

8. Système d'échange d'électricité selon la revendication 1, dans lequel
le contenu d'échange d'électricité comprend un prix d'échange d'électricité, une quantité d'échange d'électricité et une condition d'échange.

9. Système d'échange d'électricité selon la revendication 8, dans lequel
la couche de consensus de contrat (1033, 4033) comprend l'un parmi ou une combinaison d'une unité de centre de compte, d'une unité d'enregistrement d'achat et de vente d'électricité, d'une unité de mise en correspondance des prix d'achat et de vente de l'électricité, d'une unité de réalisation d'échange d'achat et de vente d'électricité, d'une unité de mécanisme de consensus, d'une unité de contrat intelligent, d'une unité de code de script et d'une unité de système de paiement.

10. Système d'échange d'électricité selon la revendication 1, dans lequel
le module de chaîne de blocs (103, 403) est conçu pour utiliser une monnaie virtuelle ou une monnaie électronique pour la négociation ou l'échange d'électricité.
le réseau de chaîne de blocs (200) est une chaîne publique, une chaîne privée ou une chaîne d'alliance ; et
tout ou partie des nœuds de la chaîne publique, de la chaîne privée ou de la chaîne d'alliance disposent d'autorisations complexes de lecture, d'écriture et de tenue de comptes.

11. Système d'échange d'électricité selon la revendication 1, dans lequel
le module de communication (104, 303, 404) est l'un parmi ou une combinaison d'un module de communication RS485, d'un module RFID, d'un module Bluetooth, d'un module WIFI, d'un module de courant porteur en ligne, d'un module de réseau 3G, d'un module de réseau 4G, d'un module de réseau 5G et d'un module Internet.
